# EUROPEAN PATENT SPECIFICATION

(11) **EP 0 378 398 B1**
(45) Date of publication and mention of the grant of the patent: **24.07.1996**
(21) Application number: 90300292.1
(22) Date of filing: 10.01.1990
(51) Int. Cl.: G06F 13/12

(54) **Data processing system with means for detecting status of data processing device receiving commands**
Datenverarbeitungssystem mit Mitteln zur Zustandserkennung der Befehle empfangenden Datenverarbeitungseinrichtung
Système de traitement de données avec moyens pour la détection de l'état du dispositif de traitement de données recevant des commandes

(30) Priority: 13.01.1989 US 297780
(43) Date of publication of application: 18.07.1990
(73) Proprietor: International Business Machines Corporation, Armonk, N.Y. 10504 (US)
(72) Inventor: Mathis, Joseph Richard, Georgetown, TX 78628 (US); Oehler, Richard Raphael, New York 10589 (US); Zeitler, Carl, Jr., Austin, TX 78750 (US)
(74) Representative: Burt, Roger James, Dr.

(56) References cited:
- US-A- 3 488 633
- US-A- 3 833 930
- US-A- 4 514 823
- PATENT ABSTRACTS OF JAPAN, vol. 9, no. 141 (P-364)[1864], 15th June 1985; & JP-A-60 20 258

## Description

This invention relates to arrangements for detecting the status of an input/output device within a data processing system which receives commands from within the data processing system and from elsewhere.

In the control of input/output devices by means of a data processing system, a program will issue commands that will initiate required actions in each input/output device. The command may be a request to start, stop or cancel some action or event. The start command, for example, may be an explicit start command or an implied start command through the loading of a value into a device register.

When a command is issued, the program does not always know exactly the status of the input/output device. It can read a status signal to determine the device status. However, if external asynchronous events can subsequently alter the status of the input/output device, then the status signal may simply reflect the status only at the instant the status signal was sent. It does not indicate the status at a future point in time when the command is to be issued. Thus, there exists some uncertainty of the status of the device when the command is issued.

One way to circumvent the problem of this uncertainty is to design the input/output device to include intelligence having the capability to determine if current conditions permit the acceptance and execution of the specific command that is issued. This determination and start of execution must occur at a single atomic point in time. The problem now is to determine if the command has been accepted and execution started or if the command has been rejected and the operation aborted. Reading a status signal in a subsequent operation will tell the status at that point in time, but will be at some later point in the operation of the system.

This problem has previously been dealt with in known computer systems such as the IBM System 360 using an architecture providing a feedback in the form of condition codes to inform the computer program of the success or failure of a Start-I/O command. The condition codes reflected the status of the I/O device following issuing of the command. The condition codes were then generated by the communications channel and did not reflect the action taken by the actual input/output device.

The IBM System 370-XA computer system architecture defined other commands "Store-Subchannel" and "Test-Subchannel". These commands read subchannel status and placed a status signal in main storage. The Test-Subchannel command also reset the subchannel in any pending interrupts. However, neither command initiated an operation or transaction within the channel.

In most computer systems today the computer program being executed in the system processor has a very tight coupling with each input/output device. In general, the input/output devices are mapped into the memory address space of the processor (i.e., memory mapped I/O). Thus the LOAD and STORE instructions are used to reference both memory and the I/O devices. The effective address generated by the execution of the LOAD and STORE instructions determines what facility is referenced (memory, or which I/O device or even which register within the I/O device). When the LOAD or STORE instruction is directed to an I/O device, data is transferred between the general purpose registers of the processor and the selected registers with the device. This form of I/O control is generally called Program I/O or PIO.

IBM Technical Disclosure Bulletin, VOL. 15, No. 4, September, 1972, pages 1232-33, entitled "Channel Initiated Subsystem Diagnostics" discloses a typical and traditional method of dispatching channel commands. In this article diagnostic test commands are dispatched over a channel and at the end of the designated test, a status signal is provided.

IBM Technical Disclosure Bulletin, Vol. 30, No. 11, April, 1988, pages 28-31, entitled "SPD I/O Bus Operation Testing Protocol" also discloses a protocol for initiating tests. After a bus operation request message has been sent and a bus operation function block has been read, a status signal will be returned to the host processor representing the initial status of the device to be tested.

US-A-4 514 823 describes a data processing system in which three types of signal (frame) A1, A2 and A3 are used by the host processor 12 to send, via the logic 18, a command to an I/O device 20 and three types of signal (frame) B1, B2 and B3 are used by the I/O device 20 to communicate back to the host processor 12, via the logic 18.

The frames A1, A2 and A3 define the actual command sent to the I/O device. On receipt of one of these command frames the I/O device sends back one of the frames B1, B2 or B3. These frames are different types of signal all relating to the nature of the command defined in the received signal A1, A2 or A3 and how this command is to be performed by the I/O device 20. Frame B1 is an interrupt frame relating to the performance of the command by the I/O device. Frame B2 relates to the need to transfer data from the the host storage 14 to the I/O device in performing the command. Frame B3 relates to the need to transfer data from the I/O device to the host storage in performing the command.

The frames B1, B2 and B3 are of three types. The frames B2 and B3 relate to the need to transfer data between the host storage 14 and the I/O device in performing the command specified in the frame A received and clearly do not relate to the status of the I/O device. The frame B1 indicates either that the command specified has been performed or that an error has occurred or that an external event has occurred. These parameters relate to the performance of the command specified and do not relate to the status of the I/O device when the command has been received, which status is independent of the command.

The object of the present invention is to provide an improved arrangement for detecting the status of an I/O device in a data processing system.

The invention relates to a data processing system comprising a processor means for issuing communications commands on a first communications channel, a peripheral means, connected to the first communications channel and to a second communications channel operating asynchronously, for performing operations specified by commands from the processor means and for responding to communications on the second communications channel, and status indicating means including control means for providing a status word to the processing means in response to a command issued to the peripheral means by the processor means, the status word indicating to the processor means the status of the peripheral means.

According to the invention the data processing system is characterised in that the status word indicates the status of the peripheral means at a time when the peripheral means initiates an operation specified by the issued command.

In order that the invention may be more readily understood, an embodiment will now be described with reference to the accompanying drawings, in which :
Figure 1 is a block diagram illustrating a data processing system processor connected to several I/O devices,
Figure 2 is a diagram illustrating the contents of an I/O initiation command used in the system illustrated in Figure 1,
Figure 3 is a diagram illustrating the information flow between a processor and an I/O device during the transmission of an I/O initiation command in the system illustrated in Figure 1,
Figure 4 is a block diagram illustrating a network structure in which each network includes a processor and an I/O device, the I/O devices interconnecting the other systems through a communication link,
Figure 5 is a diagram illustrating a network data exchange flow for a normal exchange of data,
Figure 6 is a diagram illustrating a network data exchange flow for an abnormal exchange of data where two systems are attempting to communicate at the same time; and
Figure 7 is a diagram illustrating a network data exchange flow when the system I/O device receives the I/O initiation command after receiving a communications on the channel link.

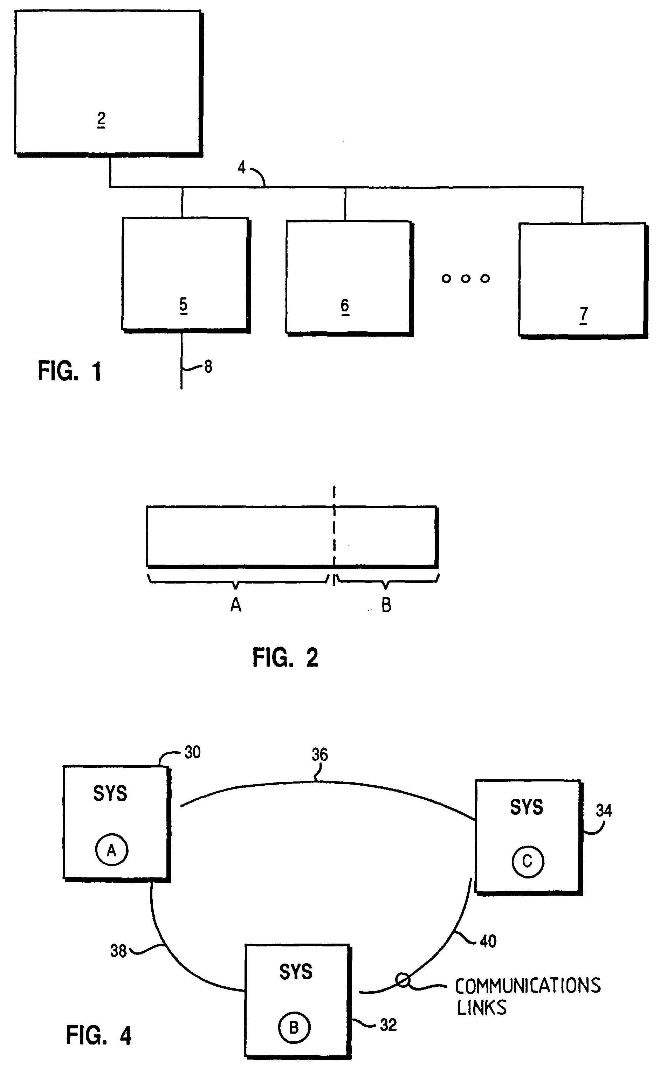

The data processing system now to be described provides a mechanism for communicating with an external peripheral device that is in turn communicating with other devices in an asynchronous manner. Figure 1 is a block diagram illustrating a system processor 2 that is connected through a first communication channel 4 to several I/O devices or adapters 5, 6 and 7. The I/O devices or adapters 5, 6 and 7 may in turn be connected by a communication link (or a second communication channel) 8 to other devices.

Figure 2 is a diagram illustrating the format of an I/O initiation command. To the system processor, this command operates as if it is a LOAD command with an effective address. The effective address is a 32 bit address that contains an I/O device address in a first portion A and, in a second portion B, a command or register designation within the I/O device. When this I/O initiation command is provided on the communications bus 4 to an I/O device (such as 5) the I/O device returns data in 32 bit form. This contains a status signal representing the device status. The device status signal contains such information as: the current channel status, if the command that was received was rejected, any pending error conditions, and any conditions representing the operational status of the second channel.

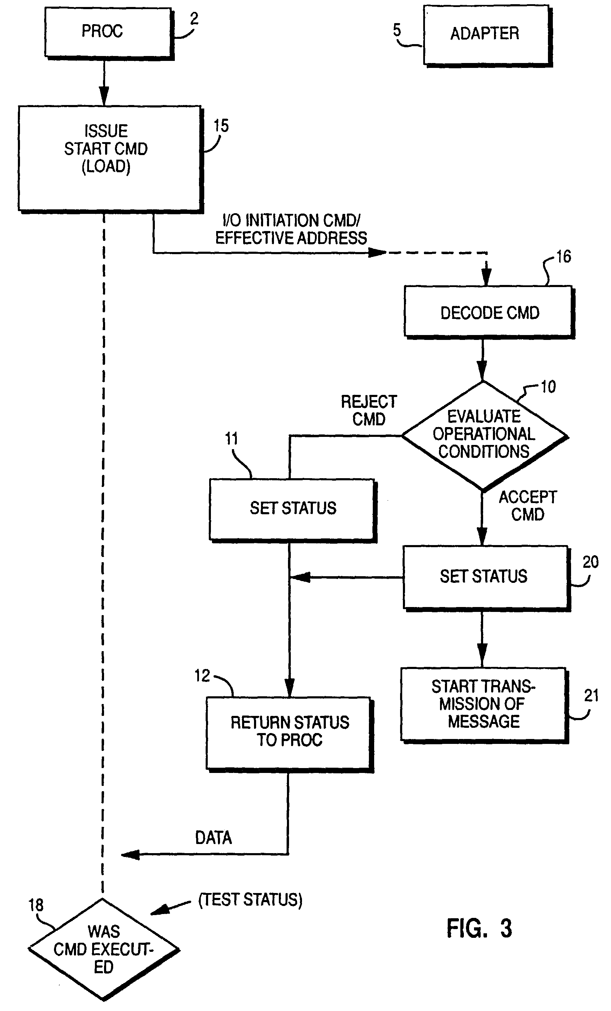

Figure 3 is a flow diagram illustrating the operation of the processor 2 and a device or adapter 5 as a result of receiving the I/O initiation command. The processor 2 executes a LOAD command (step 15) which, with its effective address, operates as the I/O initiation command. This is issued across the communications channel 4 to the I/O adapter 5. Upon receiving this command, the I/O adapter 5 decodes the command in step 16. In step 10 the I/O adapter evaluates the operational conditions of the adapter at that time and either rejects the command and sets the status signal accordingly in step 11 or accepts the command and sets the status signal accordingly in step 20. If the command has been rejected the adapter 5 returns the status signal to the processor in step 12. If the command is accepted, the adapter 5 returns the status signal to the processor in step 12 and simultaneously starts the transmission of the message in accordance with the command (in step 21). Upon receiving the status signal over the communications channel 4, processor 2 then proceeds to step 18 to determine from the status signal if the command has been executed.

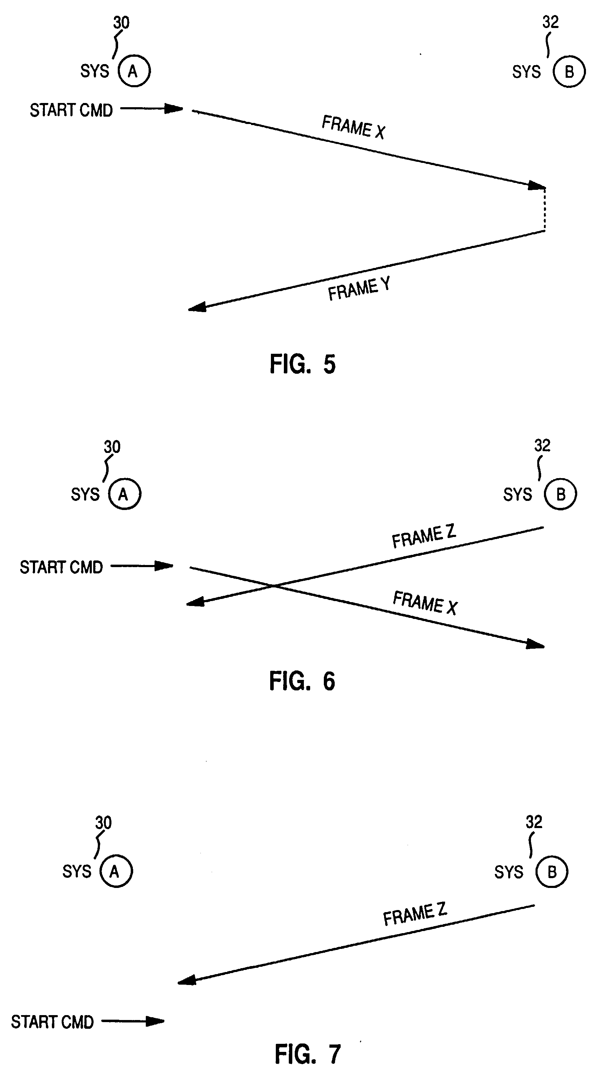

Figure 4 is block diagram illustrating simply the network structure containing three systems 30, 32 and 34 that are interconnected with communications links 36, 38 and 40. Each system, such as system 30, includes a processor such as processor 2, a communications channel 4 and at least one I/O device or adapter such as 5. The I/O adapter provides for data flow over the communications links.

Figure 5 is a network data exchange flow diagram illustrating such a flow of data over the communications links. In Figure 5 a command is received from System A 30 which provides a Frame X to a System B 32. In response to receiving Frame X System B 32 provides a Frame Y back to System A 30. In this example the I/O initiation command initiates the transfer of Frame X.

Figure 6 illustrates an abnormal network data flow when the I/O initiation command has been provided to the System A 30 I/O device or adapter resulting in the Frame X being transmitted. In this example the I/O device or adapter, after receiving the I/O initiation command, returns a status signal indicating that the I/O initiation command has been accepted and that Frame X is starting to be transmitted. The expected Frame Y in response to Frame X will not be transmitted by System B 32 because System B 32 has initiated transfer of Frame Z in response to an I/O command from its processor. System A 30 detects receipt of Frame Z and not the expected Frame Y and may, for example, abort the operation.

Figure 7 illustrates a network data flow where a Frame Z has been transmitted by System B 32 to System A 30. Under normal circumstances the I/O device or adapter in System A 30 will respond by transmitting a frame back to System B 32. However in this instance a start command is received right at the completion of the Frame Z transmission. Internally in the I/O device or adapter of System A 30, since the I/O device or adapter is expected to respond to the Frame Z transmission, the I/O initiation command will be rejected and the requested Frame X transmission will not be made. The status signal returned by the I/O device or adapter will reflect the rejection of this command.

It should be apparent to one skilled in the art that the chief advantage provided by the arrangement described above is that the status signal representing the status of the I/O device is provided quickly to the processor allowing the processor to determine quickly whether or not the start command is to be executed by the I/O device. This information is provided in a manner that prevents any possible confusion or uncertainty as to the status of the I/O device when the command has been received.

## Claims

1. A data processing system comprising
a processor means (2) for issuing communications commands on a first communications channel (4),
a peripheral means (5, 6, 7), connected to said first communications channel and to a second communications channel (8) operating asynchronously, for performing operations specified by commands from said processor means and for responding to communications on said second communications channel, and
status indicating means including control means for providing a status word to said processing means in response to any of said commands issued to said peripheral means by said processor means, said status word indicating to said processor means the status of said peripheral means,
characterised in that
said status word indicates the status of said peripheral means at a time when said peripheral means initiates an operation specified by said issued command.

2. A data processing system as claimed in claim 1 characterised in that said status word indicates whether said peripheral means will not perform said specified operation.

3. A data processing system as claimed in claim 1 or Claim 2 characterised in that said processor means comprises means for receiving said status word from said peripheral means and for determining from said status word if said command is being performed by said peripheral means.

4. A data processing system as claimed in any one of the preceding claims characterised in that said means for providing said status word comprises means for providing an indication of the current operational status of said peripheral means and of said second channel at said time when said operation specified by said command is initiated.

5. A data processing system according to Claim 4 characterised in that said control means comprises means for providing said status word when the perhipheral means initiates a first operation specified by the received command.

## Patentansprüche

1. Ein Datenverarbeitungssystem mit:
einer Prozessoreinrichtung (2) für das Ausgeben von Übertragungsbefehlen auf einem ersten Übertragungskanal (4),
einer Peripherieeinrichtung (5, 6, 7), die mit dem ersten Übertragungskanal und mit einem zweiten Übertragungskanal (8), die asynchron arbeiten, verbunden ist, um Operationen, die durch Befehle der Prozessoreinrichtung angegeben werden, auszuführen und um auf Datenübertragungen auf dem zweiten Übertragungskanal zu reagieren, und
Zustandsanzeigeeinrichtungen einschließlich Steuereinrichtungen für das Bereitstellen eines Zustandsworts an die Verarbeitungseinrichtung als Reaktion auf einen der von der Prozessoreinrichtung an die Peripherieeinrichtung ausgegebenen Befehle, wobei das Zustandswort der Prozessoreinrichtung den Zustand der Peripherieeinrichtung anzeigt,
dadurch gekennzeichnet, daß
das Zustandswort den Zustand der Peripherieeinrichtung zu einem Zeitpunkt angibt, wenn die Peripherieeinrichtung eine durch den ausgegebenen Befehl angegebene Operation einleitet.

2. Ein Datenverarbeitungssystem nach Anspruch 1, dadurch gekennzeichnet, daß das Zustandswort angibt, ob die Peripherieeinrichtung die angegebene Operation ausführt oder nicht.

3. Ein Datenverarbeitungssystem nach Anspruch 1 oder Anspruch 2, dadurch gekennzeichnet, daß die Prozessoreinrichtung eine Einrichtung umfaßt, um das Zustandswort von der Peripherieeinrichtung zu empfangen und um anhand des Zustandsworts zu bestimmen, ob der Befehl von der Peripherieeinrichtung ausgeführt wird.

4. Ein Datenverarbeitungssystem nach einem der vorangehenden Ansprüche, dadurch gekennzeichnet, daß die Einrichtung für das Bereitstellen des Zustandsworts eine Einrichtung für das Bereitstellen eines Hinweises auf den aktuellen Betriebszustand der Peripherieeinrichtung und des zweiten Kanals zu dem Zeitpunkt umfaßt, wenn die durch den Befehl angegebene Operation eingeleitet wird.

5. Ein Datenverarbeitungssystem nach Anspruch 4, dadurch gekennzeichnet, daß die Steuereinrichtung eine Einrichtung für das Bereitstellen des Zustandsworts umfaßt, wenn die Peripherieeinrichtung eine durch den empfangenen Befehl angegebene erste Operation einleitet.

## Revendications

1. Système de traitement de données comprenant
un dispositif processeur (2) pour émettre des commandes de communication sur un premier canal de communication (4),
des organes périphériques (5, 6, 7) reliés au dit premier canal de communication et à un second canal de communication (8) qui opèrent de manière asynchrone, pour exécuter des opérations précisées par les commandes émanant du dit dispositif processeur et pour répondre aux communications sur le dit second canal de communication, et
des moyens d'indication d'état incluant un moyen de contrôle qui fournit un mot d'état au dit dispositif processeur en réponse à l'une quelconque des commandes délivrées aux dits organes périphériques par le dit dispositif processeur, le dit mot d'état indiquant au dit dispositif processeur l'état des dits organes périphériques,
caractérisé en ce que
le dit mot d'état indique l'état des dits organes périphériques au moment où les dits organes périphériques lancent une opération précisée par la dite commande délivrée.

2. Système de traitement de données tel que revendiqué dans la revendication 1, caractérisé en ce que le dit mot d'état indique si les dits organes périphériques n'exécuteront pas la dite opération spécifiée.

3. Système de traitement de données tel que revendiqué dans la revendication 1 ou 2, caractérisé en ce que le dit dispositif processeur comprend un moyen pour recevoir le dit mot d'état envoyé par les dits organes périphériques et pour déterminer à partir du dit mot d'état si la dite commande est exécutée par les dits organes périphériques.

4. Système de traitement de données tel que revendiqué dans l'une quelconque des revendications précédentes, caractérisé en ce que le dit moyen fournissant le dit mot d'état comprend un moyen pour donner une indication sur les états opérationnels courants des dits organes périphériques et du dit second canal de communication au dit moment où la dite opération spécifiée par la dite commande est lancée.

5. Système de traitement de données tel que revendiqué dans la revendication 4, caractérisé en ce que le dit moyen de contrôle comprend un moyen pour délivrer le dit mot d'état quand les dits organes périphériques lancent une première opération spécifiée par la commande reçue.
